# EUROPEAN PATENT APPLICATION

(11) **EP 1 863 267 A1**
(43) Date of publication of application: **05.12.2007**
(21) Application number: 06114926.6
(22) Date of filing: 02.06.2006
(51) Int. Cl.: H04N 1/32

(54) **Positioning device using information database**

(71) Applicant: Tekom Technologies, Inc., 235 Junghe City, Taipei (TW)
(72) Inventor: TSAI, Tien-Chin, 235, Junghe City, Taipei (TW)
(74) Representative: Beck, Michael Rudolf

(57) **Abstract**

The present invention links a portable electric device to an information provider sytsem. The portable electric device takes a photograph and shows a map of the location where the photograph is taken. Through a request from the portable electric device, the information provider system provides information for daily life around the location.

## Description

### Field of the invention

The present invention relates to a positioning device; more particularly, relates to showing a map for a location where a photograph is taken, and obtaining related real-time information for daily life around the location.

### Description of the related art

A general portable electric device, such as a computer, a personal digital assistant (PDA) or a mobile phone, has now become a multimedia device for data processing and Internet surfing with functions of communication, photography, global positioning system (GPS), etc.

Although the prior art can process data and surf on the Internet with functions of communication, photography, GPS, a photograph taken by the prior art records a time and a date for the photograph only and the GPS searches data from a database of the prior art only while the database requires regular updates. Hence, the prior art does not fulfill users' requests on actual use.

### Summary of the invention

The object of the present invention is to improve the availability of information and data relating to photographs.

The invention provides a photograph positioning device according to claim 1. Advantageous embodiments are laid down in the further claims.

By the invention it is possible to show a real-time map for a location where a photograph is taken, and to obtain related real-time information for daily life around the location through a linkage between a portable electric device and an information provider.

To achieve the above purpose, the present invention is a positioning device using information database, comprising a portable electric device and an information provider, where the portable electric device comprises a central processor, a photograph capture unit connected with the central processor to take photograph, a coordinates locator connected with the central processor to obtain a longitude and latitude of a location a photograph is taken, a storage unit connected with the central processor to store the photograph and data for the photograph, a geographical-location display member connected with the central processor to obtain a map of a longitude and latitude for the location of the photograph, and a signal processor connected with the central processor; the information provider links to the signal processor of the portable electric device to provide requested information; the information provider comprises a communication linkage unit to link to the portable electric device, a server to certificate the portable electric device, and a database to provide requested information through a linkage with the server by a database linkage. Accordingly, a novel positioning device using information database is obtained.

### Brief description of the drawings

The present invention will be better understood from the following detailed description of the preferred embodiment according to the present invention, taken in conjunction with the accompanying drawings, in which
FIG. 1 is a structural view showing a preferred embodiment according to the present invention;
FIG. 2 is a block view of the portable electric device;
FIG. 3 is a block view of the information provider; and
FIG. 4 is a view of a status of use.

### Description of the preferred embodiment

The following description of the preferred embodiment is provided to understand the features and the structures of the present invention.

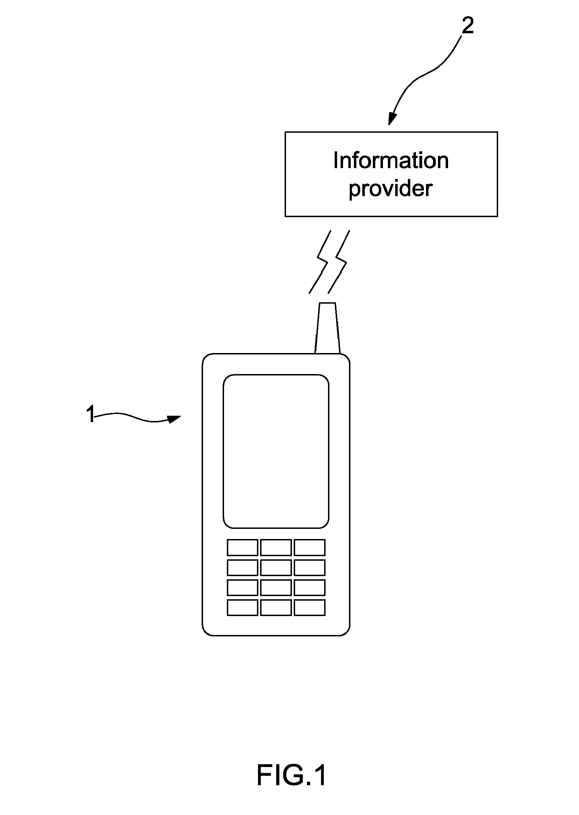

Please refer to FIG. 1, which is a structural view showing a preferred embodiment according to the present invention. As shown in the figure, the present invention is a positioning device using information database, comprising a portable electric device 1 and an information provider 2, where the portable electric device 1 shows a map of a location a photograph is taken and, by linking the portable electric device 1 and the information provider 2, information for daily life around the location are provided.

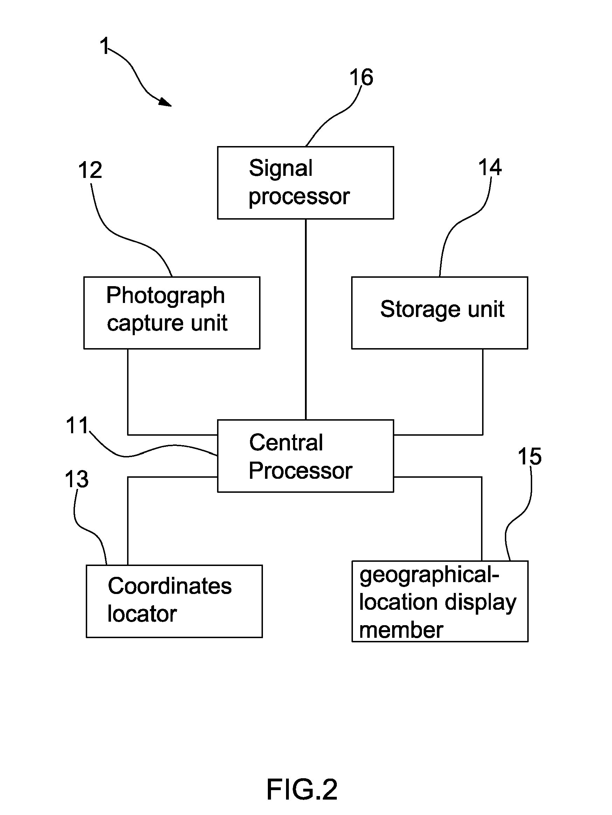

Please refer to FIG. 2, which is a block view of a portable electric device. The portable electric device 1 is a portable communication device, such as a computer, a personal digital assistant (PDA), a mobile phone, etc.. The portable electric device 1 comprises a central processor 11; a photograph capture unit 12 connected with the central processor 11 to take a photograph; a coordinates locator 13 connected with the central processor 11 to provide a longitude and latitude of a location a photograph is taken; a storage unit 14 connected with the central processor 11 to store the photograph and data for the photograph; a geographical-location display member 15 connected with the central processor 11 to show a map of the location of the photograph; and a signal processor 16 connected with the central processor 11, where the coordinates locator 13 is a Global Position System (GPS) and the data for the photograph is related information for the photograph, such as a time, a date and a longitude and latitude.

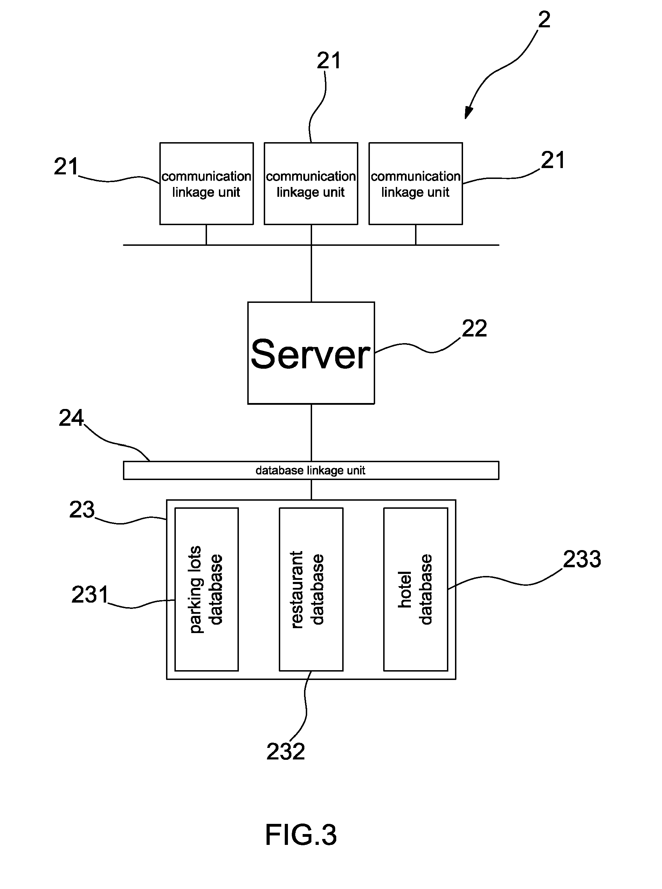

Please refer to FIG. 3, which is a block view of an information provider system. The information provider system 2 is linked to a signal processor 16 (please refer to FIG. 2) of a portable electric device 1 (please refer to FIG. 2) to provide related information. The information provider system 2 comprises a communication linkage unit 21 to link to the portable electric device 1; a server to certificate the portable electric device 1; and a database to provide requested information through a linkage with the server 22 by the database linkage unit 24, where the database linkage unit 24 provides a linkage of NetBEUI or TCP/IP; the database 23 has information related to daily lives, including a parking lots database 231, a restaurant database 232 and a hotel database 233; and the information in the database 23 is real-time updated. Thus, with the above structure, a novel positioning device using information database is obtained.

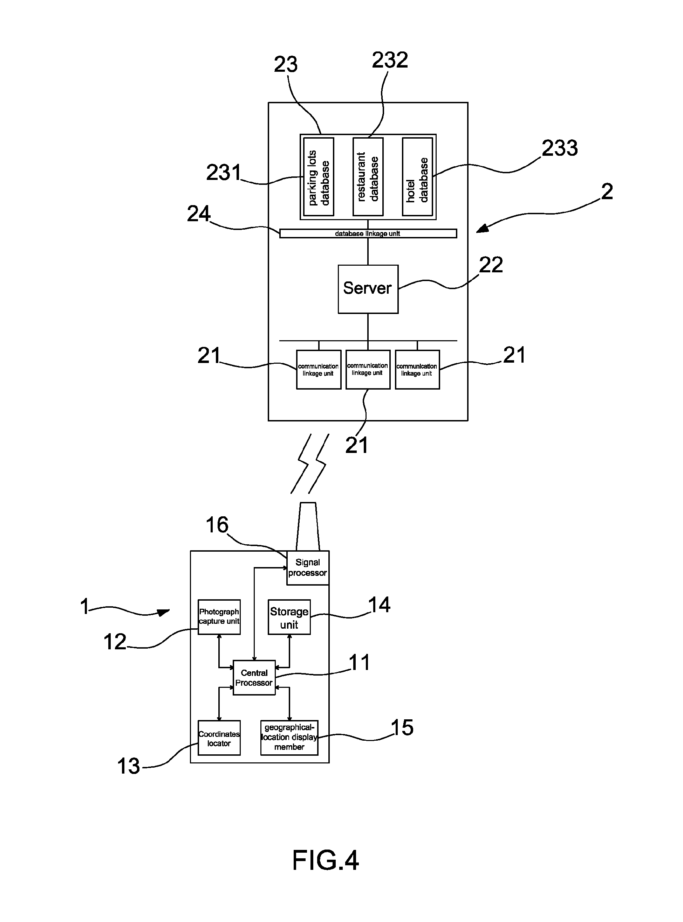

Please refer to FIG. 4, which is a view of a status of use. As shown in the figure, when using the present invention, the photograph capture unit 12 of the portable electric device 1 takes a photograph at a location, where a person, a street, a shop, etc. is taken. When the photograph capture unit 12 takes the photograph, a time, a date and a longitude and latitude of the photograph is simultaneously stored in the storage unit 14 coordinated with the coordinates locator 13. Consequently, the photograph and data for the photograph are stored in the storage unit 14. When a map of the location for the photograph is requested, the portable electric device 1 reads the photograph and the data for the photograph in the storage unit 14; the coordinates locator 13 analyzes the longitude and latitude of the location of the photograph; and, the portable electric device 1 displays the map of the location for the photograph coordinated with the geographical-location display member. By doing so, the portable electric device 1 real-time displays the map of the location of the photograph to clearly and precisely recognize the location where the photograph is taken.

When related information around the location for the photograph are requested, the signal processor 16 of the portable electric device 1 links the information provider 2 through the communication linkage unit 21. After entering required message and password, the portable electric device 1 is linked to the server 22 through a certification by the server 22. Related information around the location for the photograph are displayed and a certain item in the information can be selected; then information for the selected item is read through the server 22 with the database linkage unit 24, where the information is obtained from a database 23 related to daily lives, including a parking lots database 231, a restaurant database 232 and a hotel database 233. By doing so, the portable electric device 1 links to the information provider to obtain related information for daily lives around the location for the photograph.

To sum up, the present invention is a positioning device using information database, where a map for a location a photograph is taken is real-time obtained; and, through a linkage between a portable electric device and an information provider, related information for daily life around the location the photograph is taken is real-time obtained.

The preferred embodiment herein disclosed is not intended to unnecessarily limit the scope of the invention. Therefore, simple modifications or variations belonging to the equivalent of the scope of the claims and the instructions disclosed herein for a patent are all within the scope of the present invention.

## Claims

1. A positioning device using information database, comprising:
(a) a portable electric device (1), said portable electric device comprising
- a central processor (11);
- a photograph capture unit (12);
- a coordinates locator (13);
- a storage unit (14);
- a geographical-location display member (15); and
- a signal processor (16); and
(b) an information provider system (2), said information provider system comprising
- a communication linkage unit (24);
- a server (22); and
- a database (23),
wherein said central processor is connected with said photograph capture unit, said coordinates locator, said storage unit, said geographical-location display member, and said signal processor;
wherein said photograph capture unit takes a photograph, said storage unit stores said photograph and data for said photograph, said coordinates locator provides a longitude and latitude of a location a photograph is taken, and said geographical-location display member obtains a map of said location said photograph is taken;
wherein said information provider is linked with said signal processor of said portable electric device and said database is linked to said server through a database linkage unit; and
wherein said information provider system provides information by said database and said server certificates said portable electric device.

2. The positioning device according to claim 1, wherein said portable electric device (1) is a portable communication device selected from a group consisting of a computer, a personal digital assistant (PDA) and a mobile phone.

3. The positioning device according to claim 1 or 2, wherein said coordinates locator (13) is a global positioning system (GPS).

4. The positioning device according to one of claims 1 to 3, wherein said data for said photograph includes a time, a date and a longitude and latitude for said photograph.

5. The positioning device according to one of claims 1 to 4, wherein said database linkage unit (24) provides a linkage of a protocol selected from a group consisting of NetBEUI and TCP/IP.

6. The positioning device according to one of claims 1 to 5, wherein said database (23) is a database for daily life, including a parking lots database, a restaurant database and a hotel database.
